# EUROPÄISCHE PATENTSCHRIFT

(11) **EP 1 658 157 B1**
(45) Veröffentlichungstag und Bekanntmachung des Hinweises auf die Patenterteilung: **23.03.2016**
(21) Anmeldenummer: 04740305.0
(22) Anmeldetag: 25.06.2004
(51) Int. Cl.: B23K 35/36, B23K 35/02

(54) **FLUSSMITTEL ZUM LÖTEN VON METALLBAUTEILEN**
FLUXING AGENT FOR SOLDERING METAL COMPONENTS
AGENT FONDANT POUR SOUDER DES ELEMENTS METALLIQUES

(30) Priorität: 25.06.2003 DE 10328745
(43) Veröffentlichungstag der Anmeldung: 24.05.2006
(73) Patentinhaber: MAHLE Behr GmbH & Co. KG, 70469 Stuttgart (DE)
(72) Erfinder: BOGER, Snjezana, 73734 Esslingen (DE); ENGLERT, Peter, 74177 Bad Friedrichshall (DE); PFITZER, Matthias, 73779 Deizisau (DE); SEDLMEIR, Sabine, 72270 Baiersbronn (DE); TRAUTWEIN, Ingo, 74321 Bietigheim (DE)
(74) Vertreter: Grauel, Andreas
(86) Internationale Anmeldenummer: PCT/EP2004/006894
(87) Internationale Veröffentlichungsnummer: WO 2004/113014

(56) Entgegenhaltungen:
- WO-A-00/73014
- WO-A-01/74530
- WO-A-03/072288
- DE-A1- 2 614 872
- DE-A1- 19 913 111
- DATABASE WPI Section Ch, Week 200349 Derwent Publications Ltd., London, GB; Class M23, AN 2003-514599 XP002320579 & CN 1 413 797 A (UNIV HARBIN POLYTECHNIC) 30. April 2003 (2003-04-30)
- DC LIN, S LIU, TM GUO, G-X WANG, TS SRIVATSAN, M PETRAROLI: "An investigation of nanoparticles addition on solidification kinetics and microstructure development of tin-lead solder" MATERIALS SCIENCE ENGINEERING, Bd. a360, 15. November 2003 (2003-11-15), Seiten 285-292, XP008044125 USA

## Beschreibung

Die Erfindung bezieht sich auf ein Flussmittel zum Löten von Metallbauteilen. Des Weiteren betrifft sie ein Verfahren zur Herstellung eines derartigen Flussmittels, ein Verfahren zum Löten und eine Verwendung eines derartigen Flussmittels.

Zum Löten von metallischen Werkstoffen ist es erforderlich, dass die an ihren Oberflächen gebildete Oxidschicht vor dem Löten zumindest teilweise entfernt wird und beim Lötprozess nicht neu gebildet wird. In der Regel erfolgt dies mit speziellen Lösemitteln für Metalloxide, den sogenannten Flussmitteln.

Wegen der speziellen Materialeigenschaften der Metalle ist häufig das Aufbringen eines nicht korrosiven, nicht hygroskopischen Flussmittels wünschenswert. Die DE 199 13 111 A1 offenbart Alkalifluorzinkate als Flussmittel, wobei der Zinkanteil eine korrosionsschützende Oberfläche auf Bauteilen auf Aluminiumbasis erzeugt. Auch in der EP 0 659 519 B1 wird ein zinkhaltiges Flussmittel zur Verbesserung des Korrosionsschutzes offenbart. Aus der DE 100 154 86 A1 sind Kalium- und/oder Cäsiumfluorstannate-als Flussmittel zur Lötung magnesiumhaltiger Aluminiumwerkstoffe bekannt. Aus der WO 00/73014 A1 ist es bekannt, durch Aufbringen von Alkalimetallhexafluorsilikat als Flussmittel auf Bauteile aus Aluminium oder Aluminiumlegierungen und Erhitzen eine Aluminium-Silicium-Beschichtung zu erzeugen, die durch die gleichzeitige Bildung einer nicht-korrosiven Kaliumfluoraluminat-Schicht wirksam vor einer Reoxidation geschützt wird.

Zum Hartlöten von Einzelteilen für Wärmetauscher, das heißt insbesondere von Kühlem, wie sie in der Automobilbranche verwendet werden, ist es bei der Verwendung von Aluminium oder Aluminiumlegierungen als Grundmaterial derzeit üblich, spezielle Lötverfahren einzusetzen, insbesondere das so genannte "Nocolok"-Löten (s. z.B. DE-OS 26 14 872). Bei diesem Lötverfahren wird ein Flussmittel auf der Basis von Kaliumfluoroaluminaten mit der Summenformel K₁₋₃AlF₄₋₆ verwendet, das im Handel unter der Bezeichnung "Nocolok" erhältlich ist. Dieses "Nocolok"-Flussmittel verbleibt nach dem Löten auf der Oberfläche und überzieht sie mit einer kristallinen Schicht.

Um den Anforderungen der Industrie an Bauteile, beispielsweise an Aluminium-Wärmeübertragern im Automobilbereich, wie sie derzeit z.B. in Klimaanlagen zum Einsatz kommen, hinsichtlich erwünschter Eigenschaften, wie korrosionsbeständiger, hydrophiler und/oder haftender Oberflächen und/oder einem dekorativen Aussehen, gerecht zu werden, ist eine Oberflächenbehandlung nach dem Lötprozess vielfach unumgänglich.

Als Oberflächenbehandlungsverfahren von Aluminium stehen verschiedene Standardverfahren zur Verfügung, wie beispielsweise Reinigungs- und Konversionsbehandlungen mit Chromatier- oder Phosphatierprozessen. Die dabei abgeschiedenen Schichten erhöhen die chemische Beständigkeit des Trägermaterials und verbessern die Haftung von Lack- und Kunststoffbezügen (G. Stolzenfels, "Chemische Oberflächenbehandlung von NE-Metallen vor dem Aufbringen organischer Beschichtungssysteme", Industrie-Lackier-Betrieb, 44. Jahrgang (1976), Nr. 3, S. 93-98, Curt R. Vincentz Verlag; L. de Riese-Meyer, L. Kintrup, H.-D. Speckmann, "Bildung und Aufbau Chrom(VI)-haltiger Konversionsschichten aus Aluminium", Soncierdruck aus Aluminium, Jahrgang 67 (1991), Nr. 12, S. 1215-1221).

Die US 5,795,659 beschreibt eine Behandlung der Aluminiumoberfläche mit Zirconium, Hafnium, Rhenium, Mangan, Titan, Silicaten und Boraten zum Korrosions- und Hochtemperaturkorrosionsschutz. Die US 5,584,946 beschreibt ein chromfreies Vorbehandlungs- und Oberflächenbehandlungsverfahren auf der Basis komplexer Fluoride der Elemente Bor, Zirconium, Hafnium und Titan. Die US 5,962,145 beschreibt ein Oberflächenbehandiungsverfahren auf der Basis komplexer Fluoride der Elemente Bor, Zirconium, Titan, Silicium, Gerrrianium, Zinn in Verbindung mit Polymeren, während aus der US 5,518,555 ein schwermetall-, insbesondere chromfreies, sowie ein silicat- und fluorfreies Oberflächenbehandlungsverfahren auf der Basis eines anionischen Polyacrylamid-Copolymers in einer wässrigen Lösung zur Verbesserung der Korrosionsbeständigkeit und der Oberflächenhaftungseigenschaften bekannt ist.

Auch der Bereich der nanotechnologischen Oberflächenbehandlungen umfasst eine Vielzahl von Prozessen. Beispiele aus der Herstellung von Nanopartikeln sind Zerkleinern, Sprühen, Flammensynthesen, Plasmaverfahren, Laserablation, Gasphasensynthese, Sol-Gel-Verfahren, Funkenerosion und Kristallisation. Partikel mit Primärteilchengrößen im Bereich von 100 Nanometern und darunter zeichnen sich durch ein besonders großes Verhältnis von Oberfläche zu Volumen aus. Weil die Haftkraft und die Bindung der Partikel mit zunehmender Oberfläche steigt, sind damit hergestellte Schichten in der Regel besonders kratz- und abriebfest. Die Benetzbarkeit und Schmutzhaftung selbst großer Flächen lässt sich dabei deutlich vermindern, so dass allein durch Regeneinwirkung ein nahezu vollständiger Selbstreinigungseffekt erzielt werden kann.

In der Kosmetik werden nanoskalige Titandioxid-Partikel als UV-Absorber und somit als effektive Filter in Sonnenschutzmitteln eingesetzt. Diese Partikel erzeugen im sichtbaren Wellenlängenbereich keine Lichtstreuung, die Sonnencreme ist also nicht mehr weiß, sondern transparent. Die UV-Absorption ist wegen des größeren Oberflächen/Volumen-Verhältnisses besser als bei konventionellen Teilchengrößen. Weiterhin finden Nanopartikel in einer Polymermatrix Anwendung, zum Beispiel für transparente leitfähige Beschichtungen.

In der industriellen Anwendung werden neben den klassischen nanoskaligen Pigmenten wie Ruße, Eisenoxid oder Silicasole weitere Nanopartikel, zum Beispiel Zirkonoxide, angeboten. So ist beispielsweise aus der EP 1 154 042 A1 ein Wärmeaustauscher bekannt, der eine chrom- oder zirkonhaltige Konversionsschicht und eine hydrophile Schicht auf Polymerbasis, die Silicapartikel mit einem Durchmesser zwischen 5 und 1000 nm enthält, aufweist. EP0556864 beschreibt ein beschichtetes Lötpulver, umfassend Lötmittelteilchen, die mit Parylenen in einer die Oxidation der Lötmittelteilchen wirksam inhibierenden Menge von weniger als etwa 0.5 Gew.-% Parylen, bezogen auf das Gesamtgewicht des beschichteten Lötpulvers, beschichtet sind. Damit ist sowohl für einen Korrosionsschutz der Oberfläche als auch für eine erleichterte Reinigung und damit für eine Unterbindung der Geruchsemission gesorgt. Die Einarbeitung der Nanopartikel in ein Polymer und die gemeinsame Applizierung auf der Oberfläche erfordert allerdings einen eigenen Produktionsschritt mit einem entsprechenden anlagetechnischen Aufwand.

Um eine Oberflächenbehandlung im Anschluss an den Lötprozess zu vermeiden, ist es wünschenswert, ein Flussmittel zur Verfügung zu haben, mit dem bereits beim Löten eine oder mehrere spezifische Oberflächeneigenschaften erzeugt werden.

Der Erfindung liegt daher die Aufgabe zugrunde, ein für eine Lötung von Metallbauteilen geeignetes Flussmittel anzugeben, mit dem der gesamte, ansonsten üblicherweise nachgeschaltete Prozess der Oberflächenbehandlung entfällt. Weiterhin soll ein Verfahren zur Herstellung eines derartigen Flussmittels, ein Verfahren zum Löten und eine Verwendung eines derartigen Flussmittels angegeben werden.

Bezüglich des Flussmittels wird die Aufgabe erfindungsgemäß mit Anspruch 1 gelöst.

Die Erfindung geht dabei von der Überlegung aus, dass ein für die Lötung von Bauteilen eingesetztes Flussmittel derart ausgestattet sein sollte, dass eine mit weiteren Arbeitsschritten und mit weiterem apparativen Aufwand verbundene Oberflächenbehandlung des betreffenden Bauteils zur Applikation funktioneller Beschichtungen nicht mehr notwendig ist. Zur Einsparung nachgeschalteter Prozesse sind einem Basisstoff abhängig vom ausgewählten Einsatzzweck vor oder während des Lötprozesses als geeignet eingestufte Materialien zugesetzt. Damit kann bereits während des Lötens eine spezifische Oberflächenbeschichtung ausgebildet werden. Beim Materialeinsatz spielen maßgeschneiderte Strukturen, insbesondere für gewünschte Funktionen der Beschichtungssysteme, wie beispielsweise spezielle photokatalytische und/oder Adhäsionseigenschaften, eine bedeutende Rolle. Für deren Ausbildung sind die Dimensionierungen oder Größenordnungen einzelner Materialien und Gemische maßgeblich mitverantwortlich. Für eine besonders feinstrukturierte Oberflächengestaltung sind als Zusatz zum Basisstoff Partikel mit Durchmessern von wenigen millionstel Millimetern vorgesehen. Solche Nanopartikel weisen im Vergleich zu größeren Teilchen derselben chemischen Zusammensetzung eine viel geringere Zahl von Baufehlern auf. Sie bieten daher aufgrund ihrer geometrischen und materialspezifischen Eigenheiten ein besonders großes und vielseitiges Wirkungsspektrum. So zeichnen nanoskalige Partikel sich beispielsweise durch ein besonders großes Oberflächen/Volumen-Verhältnis aus. Daraus resultiert eine besondere Kratz- und Abriebfestigkeit und/oder eine besonders effektive UV-Absorption nanobeschichteter Oberflächen.

Durch entsprechend ausgewählte nanoskalige Zusätze wird ohne weitere Vor- oder Nachbehandlung bereits beim Löten der Korrosionsschutz verbessert. Des Weiteren kann durch die Zugabe von Nanopartikeln die Haftung eines gegebenenfalls nachfolgend aufgetragenen Lackes verbessert werden. Ebenfalls kann eine Verringerung der Geruchsbildung erfolgen. Außerdem bewirkt die Zugabe von bestimmten Nanopartikeln wie z. B. Kohlenstoff-Nanopartikeln noch zusätzlich eine Verbesserung der Wärmeleitfähigkeit der Beschichtung, zum Beispiel der Flussmittelschicht.

Des Weiteren wird bei Erzeugung einer funktionellen hydrophilen Oberfläche der Wasserablauf verbessert. Dadurch wird der Selbstreinigungseffekt der Oberfläche begünstigt, und durch die Begünstigung einer vergleichsweise dünnen Wasserfilmbildung ist eine schnellere Abtrocknung der Oberfläche gewährleistet. Diese Selbstreinigungs- und schnellen Abtrocknungseigenschaften minimieren zudem den Bewuchs von Mikroorganismen. Durch alle diese Faktoren wird die Gebrauchs- und/oder Leistungsfähigkeit beschichteter Bauteile verbessert.

Zur Ausbildung einer funktionellen Oberflächenbeschichtung bereits während des Lötens beträgt der Anteil an zugesetzten Nanopartikeln in Abhängigkeit von der ausgewählten Stoff- oder Verbindungsart und dem jeweiligen Verwendungszweck vorzugsweise zwischen 0,01 Vol.-% und 10 Vol.-%.

Abhängig vom ausgewählten Verwendungszweck sind dem Basisstoff als Nanopartikel vorzugsweise nanoskalige Pigmente und/oder in einem organischen Polymer dispergierte Nanoaggregate (sog. Nanolacke) aus Oxiden, Oxidhydraten, Nitriden, Carbiden von Aluminium, Silicium und Bor sowie Übergangsmetallen, vorzugsweise der IV. und V. Nebengruppe und Cer und/oder beschichtete Nanopartikel und/oder aufgepfropfte Nanopartikel vorgenannter Stoffe oder Verbindungen und/oder Kohlenstoff-Nanopartikel zugesetzt.

Das organische Polymer fungiert dabei als Bindemittel zwischen dem Basisstoff und den Nanopartikeln. Um zwischen dem Basisstoff und den Nanopartikeln eine besonders effektive Bindewirkung zu erzielen, beträgt der Anteil an organischem Polymer in der Mischung nach Trocknung vorzugsweise etwa 0,01 Vol.-% und 10 Vol.-%.

In einer besonders vorteilhaften Ausführungsform des Flussmittels sind als Polymer Polyurethane, Kunstharze, Phthalate, Acrylate, Vinylharze, Silikonharze und/oder Polyolefine eingesetzt.

In vielen Fällen weisen Nanopartikel mechanische, elektrische, magnetische oder optische Eigenschaften auf, die sich von denen makroskopischer Körper wesentlich unterscheiden. Um teilchengrößenabhängige, physikalische Eigenschaften einzelner Partikel in einem Bauteil zu konservieren, werden Nanopartikel vorzugsweise beschichtet. Um einen inneren Kern, der die gewünschten Materialeigenschaften hat, wird dazu eine Hülle gelegt, die als Abstandhalter oder Isolator dient. Ein Verfahren zur Herstellung derart beschichteter Nanopartikel kann durch Umsetzung von Vorläuferverbindungen mit einem Reaktionsgas in einem Mikrowellenplasma erfolgen. Eine Kombination mehrerer dieser Prozessschritte ergibt beschichtete Partikel, die auch noch einen Gesamtdurchmesser von wenigen Nanometern aufweisen.

Zur Modifizierung der Wechselwirkungen und Strukturen an Oberflächen, beispielsweise zur Erzeugung schaltbarer Oberflächen mit alternativ hydrophobem und hydrophilem Verhalten können Ketten unterschiedlicher Komponenten, die ein solches Verhalten aufgrund Umlagerung der Ketten zeigen, auf Nanopartikel aufgepfropft werden.

Für eine besonders vorteilhafte Ausgestaltung des Flussmittels sind als Basisstoff Kaliumfluoroaluminate mit der Summenformel K₁₋₃AlF₄₋₆ mit eingesetzt, die unter der Bezeichnung "Nocolok" im Handel erhältlich sind, und derzeit häufig als Flussmittel für eine Aluminiumlötung verwendet werden. Dabei hat das Kaliumfluoroaluminat beispielsweise nach der Produktspezifikation von Solvay Fluor und Derivate GmbH folgende Zusammensetzung: K 28-31 Gew.-%, Al 16-18 Gew.-%, F 49-53 Gew.-%, Fe max. 0,03 Gew.-%, Ca max. 0,2 Gew.-%.

Für eine weitere oder alternative, besonders vorteilhafte Ausgestaltung des Flussmittels sind als Basisstoff Kalium- und/oder Cäsiumfluorostannate mit den Summenformeln KSnF₃ und CsSnF₃ eingesetzt.

Bezüglich des Verfahrens zur Herstellung eines Flussmittels wird die genannte Aufgabe mit den Merkmalen von Anspruch 6 gelöst.

Vorteilhaft werden Nanopartikel durch Dispergierverfahren hergestellt und einem Basisstoff vor dem Lötprozess zugesetzt. Ausgehend von einigen Mikrometern Durchmesser können suspendierte Teilchen in modernen Rührwerkskugelmühlen in den Bereich von 40 bis 100 nm zerkleinert werden. Ein solches physikalisches Verfahren zur Erzeugung von Nanopartikeln aus größeren Teilchen wird als Top-down-Verfahren bezeichnet. Ein wesentliches Element bei der Verarbeitung solcher Nanoprodukte ist die Stabilisierung der Partikel in der Suspension durch entsprechende Zusätze.

Nach einem Verfahren zur Herstellung eines Flussmittels wird die genannte Aufgabe derart gelöst, indem Nanopartikel zunächst in einem organischen Polymer dispergiert und anschließend als Nanolack vor dem Lötprozess einem Basisstoff zugesetzt werden. Im Lötofen zersetzen sich die polymeren Bestandteile zu niedermolekularen flüchtigen Bestandteilen, so dass nach der Lötung üblicherweise keine polymeren Rückstände mehr feststellbar sind.

Bezüglich des Verfahrens zum Löten von Metallbauteilen wird die genannte Aufgabe gelöst mit den Merkmalen von Anspruch 8, wobei ein oben beschriebenes Flussmittel eingesetzt wird.

Nach einem Verfahren zum Löten von Metallbauteilen wird die genannte Aufgabe gelöst, indem Ausgangsstoffe für Nanopartikel vor dem Lötprozess einem Basisstoff zugesetzt werden und während des Lötprozesses durch eine chemische Reaktion gebildete Nanopartikel auf der Bauteiloberfläche abgeschieden werden. Die Reaktion erfolgt dabei vorzugsweise bei einer Temperatur in einem Bereich zwischen 350 °C und 600 °C und in einer Stickstoffatmosphäre. Ein solches chemisches Verfahren zur Erzeugung von Nanopartikeln wird als Bottom-Up-Verfahren bezeichnet. Als Ausgangsstoffe für Nanopartikel werden vorteilhafterweise Kohlenstoff, Oxide, Oxidhydrate, Nitride und/oder Carbide von Aluminium, Silicium, Bor und/oder Übergangsmetallen, vorzugsweise der IV. und V. Nebengruppe des Periodensystems und/oder Cer eingesetzt. Als Basisstoff werden vorzugsweise Kaliumfluoroaluminate mit der Summenformel K₁₋₃AlF₄₋₆ oder Kalium- und/oder Cäsiumfluorostannate mit den Summenformeln KSnF₃ und CsSnF₃ eingesetzt.

Verwendung findet ein oben beschriebenes Flussmittel zweckmäßigerweise zum Herstellen nanobeschichteter Bauteile, insbesondere Wärmeüberträger, auf der Basis von Aluminium oder Aluminiumlegierungen für den Automobilbau.

Die mit der Erfindung erzielten Vorteile bestehen insbesondere darin, dass durch den Zusatz von Nanopartikeln zu einem Basisstoff, der sich als Mittel zur Lösung von Oxidationen auf Metallbauteilen und zur Verhinderung weiterer Oxidation während des Lötprozesses bewährt hat, ein Flussmittel zur Verfügung gestellt wird, mit dem bereits beim Löten gewünschte Effekte und Oberflächeneigenschaften des betreffenden Bauteils erzeugt werden. Mit einem derartigen nanopartikelhaltigen Flussmittel entfällt der gesamte ansonsten üblicherweise dem Löten nachgeschaltete Prozess der Oberflächenbehandlung. Durch den ausgewählten Einsatz von nanoskaligen Partikeln aus unterschiedlichen Materialien, gegebenenfalls mit veränderten oder konservierten Eigenschaften durch das Dispergieren in einem Polymer bzw. durch ihre Beschichtung, wird die gewünschte Funktionalität einer Bauteiloberfläche erreicht. Auf diese Art und Weise der Oberflächenbeschichtung von Bauteilen können beispielsweise selbstreinigende und antimikrobielle Oberflächen hergestellt werden und kann der Korrosionsschutz, die Härte und Kratzfestigkeit und/oder das Aussehen der betreffenden Bauteile verbessert werden. Infolge der vorgenannten Eigenschaften wird eine erhöhte Gebrauchs- und/oder Leistungsfähigkeit dieser Bauteile erreicht.

Als ein Ausführungsbeispiel ist ein Flussmittel vorgesehen, bei dem nanoskalierte Titandioxidpartikel als Basisstoff vorgesehenen Kaliumfluoroaluminaten mit der Summenformel K₁₋₃AlF₄₋₆, die im Handel unter der Bezeichnung "Nocolok" erhältlich sind, zugesetzt sind. Dazu werden zu einer Mischung aus 300 ml Polyurethan-Bindemittel und 700 ml vollentionisiertem Wasser unter Rühren 3 Vol.% Titandioxidpartikel und 772 g Kaliumfluoroaluminate gegeben und etwa 30 Minuten mit einer Rührgeschwindigkeit von 20.000 Umdrehungen pro Minute gerührt. Anschließendes Filtrieren der Mischung über ein Edelsfiahlsieb mit der Maschengröße von 250 µm ergeben 1,5 kg eines gebrauchsfertigen Flussmittels mit der folgenden Zusammensetzung: 42 Gew.-% Kaliumfluoroaluminate, 3 Vol.% Titandioxidpartikel, 2,6 Gew.-% Polyurethan-Bindemittel und 52,4 Gew.-% vollentionisiertes Wasser.

Durch den Einsatz dieses nanopartikelhaltigen Flussmittels für das Löten von Alumimium-Bauteilen, insbesondere von Aluminium-Wärmeüberträgem, wird eine photokatalytische Beschichtung erzeugt, die in Zusammenwirkung mit UV-Licht zur Oxidation organischer Verunreinigungen führt. Dadurch erfolgt ebenfalls ein Reinigungseffekt der Aluminiumoberfläche von organischen Ablagerungen. Infolgedessen wird eine Verminderung der Gesamtleistung durch Verunreinigungen bei der Wärmeübertragung verhindert und der Bewuchs von Mikroorganismen minimiert.

## Patentansprüche

1. Flussmittel zum Hartlöten von Einzelteilen für Wärmetauscher, bei dem einem Basisstoff Nanopartikel zugesetzt sind, bei dem der Anteil an zugesetzten Nanopartikeln zwischen 0,01 Vol.-% und 10 Vol.-%, insbesondere zwischen 0,1 Vol.-% und 1 Vol.-% beträgt, wobei die Nanopartikel in einem organischen Polymer dispergierte Nanoaggregate sind,

2. Flussmittel nach Anspruch 1, bei dem als Nanopartikel nanoskaligen Pigmente und/oder Carbiden von Aluminium, Silicium, Bor und/oder Übergangsmetallen, vorzugsweise der IV. und V. Nebengruppe des Periodensystems und/oder Cer und/oder beschichtete Nanopartikel und/oder aufgepfropfte Nanopartikel vorgenannter Stoffe oder Vereindungen und/oder Kohlenstoff-Nanopartikel eingesetzt sind.

3. Flussmittel nach Anspruch 2, bei dem der Anteil an organischem Polymer in der Mischung nach Trocknung etwa 0,01 Vol.-% und 10 Vol.-%, insbesondere zwischen 0,1 Vol.-% und 1 Vol.-% beträgt.

4. Flussmittel nach Anspruch 2 oder 3, bei dem als Polymer Polyurethane, Kunstharze, Phthalate, Acrylate, Vinylharze, Silikonharze und/oder Polyolefine eingesetzt sind.

5. Flussmittel nach einem der vorhergehenden Ansprüche, bei dem als Basisstoff Kaliumfluoroaluminate mit der Summenformel K₁₋₃AlF₄₋₆ oder Kalium- und/oder Cäsiumfluorostannate mit den Summenformeln KSnF₃ und CsSnF₃ eingesetzt sind.

6. Verfahren zur Herstellung eines Flussmittels nach einem der Ansprüche 1 bis 5, bei dem Nanopartikel durch Dispergierverfahren hergestellt und einem Basisstoff vor dem Lötprozess zugesetzt werden.

7. Verfahren nach Anspruch 6, bei dem Nanopartikel zunächst in einem organischen Polymer dispergiert und anschließend als Nanolack einem Basisstoff vor dem Lötprozess zugesetzt werden.

8. Verfahren zum Hartlöten von Einzelteilen für Wärmetauscher, bei dem ein Flussmittel nach einem der Ansprüche 1 bis 5 eingesetzt wird.

9. Verfahren nach Anspruch 8 zum Hartlöten von Einzelteilen für Wärmetauscher, bei dem Ausgangsstoffe für Nanopartikel vor dem Lötprozess einem Basisstoff zugesetzt werden und während des Lötprozesses durch eine chemische Reaktion gebildete Nanopartikel auf der Bauteiloberfläche abgeschieden werden.

10. Verfahren nach Anspruch 9, bei dem die Reaktion bei einer Temperatur in einem Bereich zwischen 350°C und 660°C, insbesondere zwischen 350 °C und 600 °C und in einer Stickstoffatmosphäre erfolgt.

11. Verfahren nach Anspruch 9 oder 10, bei dem als Ausgangsstoffe für Nanopartikel Kohlenstoff und/oder Oxide, Oxidhydrate, Nitride und/oder Carbide von Aluminium, Silicium, Bor und/oder Übergangsmetallen, vorzugsweise der IV. und V. Nebengruppe des Periodensystems und/oder Cer eingesetzt werden.

12. Verfahren nach einem der Ansprüche 9 bis 11, bei dem als Basisstoff Kaliumfluoroaluminate mit der Summenformel K₁₋₃AlF₄₋₆ oder Kalium- und/oder Cäsiumfluorostannate mit den Summenformeln KSnF₃ und CsSnF₃ eingesetzt werden.

13. Verwendung eines Flussmittels nach einem der Ansprüche 1 bis 5 zum Herstellen von Wärmeüberträgem auf der Basis von Aluminium oder Aluminiumlegierungen für den Automobilbau.

## Claims

1. A flux for brazing individual components of heat exchangers, in which nanoparticles are added to a base material, in which the proportion of nanoparticles added is between 0.01% by volume and 10% by volume, in particular between 0.1% by volume and 1% by volume, wherein the nanoparticles are nanoaggregates dispersed in an organic polymer.

2. The flux as claimed in claim 1, in which the nanoparticles used are nanoscale pigments and/or carbides of aluminium, silicon, boron and/or transition metals, preferably from subgroups IV and V of the periodic system, and/or cerium and/or coated nanoparticles and/or grafted nanoparticles of the abovementioned substances or compounds and/or carbon nanoparticles.

3. The flux as claimed in claim 2, in which the proportion of organic polymer in the mixture after drying is approximately 0.01% by volume and 10% by volume, in particular between 0.1% by volume and 1% by volume.

4. The flux as claimed in claim 2 or 3, in which the polymer used is polyurethanes, synthetic resins, phthalates, acrylates, vinyl resins, silicone resins and/or polyolefins.

5. The flux as claimed in one of the preceding claims, in which the base material used is potassium fluoroaluminates with the empirical formula K₁₋₃AlF₄₋₆ or potassium and/or caesium fluorostannates with the empirical formulae KSnF₃ and CsSnF₃.

6. A process for producing the flux as claimed in one of claims 1 to 5, in which nanoparticles are produced by dispersion methods and are added to a base material prior to the brazing process.

7. The process as claimed in claim 6, in which nanoparticles are firstly dispersed in an organic polymer and then added as a nanopaint to a base material prior to the brazing process.

8. A process for brazing individual components for heat exchangers, in which a flux as claimed in one of claims 1 to 5 is used.

9. The process as claimed in claim 8 for brazing individual components for heat exchangers, in which starting materials for nanoparticles are added to a base material prior to the brazing process and nanoparticles which are formed by a chemical reaction during the brazing process are deposited on the component surface.

10. The process as claimed in claim 9, in which the reaction takes place at a temperature in a range between 350°C and 660°C, in particular between 350°C and 600°C, and in a nitrogen atmosphere.

11. The process as claimed in claim 9 or 10, in which the starting materials for nanoparticles used are carbon and/or oxides, oxide hydrates, nitrides and/or carbides of aluminium, silicon, boron and/or transition metals, preferably from subgroups IV and V of the periodic system, and/or cerium.

12. The process as claimed in one of claims 9 to 11, in which the base material used is potassium fluoro-aluminates with the empirical formula K₁₋₃AlF₄₋₆ or potassium and/or caesium fluorostannates with the empirical formulae KSnF₃ and CsSnF₃.

13. The use of the flux as claimed in one of claims 1 to 5 for producing heat exchangers based on aluminium or aluminium alloys for the automotive industry.

## Revendications

1. Fondant pour le brasage fort de pièces détachées pour des échangeurs de chaleur, fondant dans lequel des nanoparticules sont ajoutées à un matériau de base, fondant dans lequel la proportion de nanoparticules ajoutées est comprise entre 0,01 % en volume et 10 % en volume, en particulier entre 0,1 % en volume et 1 % en volume, où les nanoparticules sont des nano-agrégats dispersés dans un polymère organique.

2. Fondant selon la revendication 1, dans lequel sont introduits à taille nanométrique, en tant que nanoparticules, des pigments et / ou des carbures d'aluminium, de silicium, de bore et / ou de métaux de transition, de préférence parmi ceux des groupes secondaires IV et V de la classification périodique des éléments, et / ou du cérium, et / ou des nanoparticules enrobées et / ou des nanoparticules greffées de matériaux ou de composés cités précédemment et / ou des nanoparticules de carbone.

3. Fondant selon la revendication 2, dans lequel la proportion de polymère organique, dans le mélange après séchage, est comprise à peu près entre 0,01 % en volume et 10 % volume, en particulier entre 0,1 % en volume et 1 % en volume.

4. Fondant selon la revendication 2 ou 3, dans lequel sont introduits, en tant que polymère, des polyuréthanes, des résines synthétiques, des phtalates, des acrylates, des résines vinyliques, des résines de silicones et / ou des polyoléfines.

5. Fondant selon l'une quelconque des revendications précédentes, dans lequel sont introduits, en tant que matériau de base, des fluoroaluminates de potassium ayant la formule brute K₁₋₃AlF₄₋₆ ou des fluorostannates de potassium et / ou de césium ayant les formules brutes KSnF₃ et CsSnF₃.

6. Procédé de fabrication d'un fondant selon l'une quelconque des revendications 1 à 5, au cours duquel des nanoparticules sont fabriquées par un procédé de dispersion et ajoutées à un matériau de base, avant le processus de brasage.

7. Procédé selon la revendication 6, au cours duquel des nanoparticules sont d'abord dispersées dans un polymère organique et ensuite, avant le processus de brasage, ajoutées comme nanovernis à un matériau de base.

8. Procédé pour le brasage fort de pièces détachées pour des échangeurs de chaleur, procédé au cours duquel est introduit un fondant selon l'une quelconque des revendications 1 à 5.

9. Procédé selon la revendication 8 pour le brasage fort de pièces détachées pour des échangeurs de chaleur, procédé au cours duquel des matériaux de départ prévus pour des nanoparticules sont ajoutés à un matériau de base avant le processus de brasage, et des nanoparticules formées par une réaction chimique se produisant au cours du processus de brasage sont déposées sur la surface des composants.

10. Procédé selon la revendication 9, au cours duquel la réaction se produit à une température se situant dans une plage comprise entre 350°C et 660°C, en particulier entre 350°C et 600°C, et dans une atmosphère d'azote.

11. Procédé selon la revendication 9 ou 10, au cours duquel sont introduits, en tant que matériaux de départ prévus pour des nanoparticules, du carbone et / ou des oxydes, des hydrates oxydés, des nitrures et / ou des carbures d'aluminium, de silicium, de bore et / ou de métaux de transition, de préférence parmi ceux des groupes secondaires IV et V de la classification périodique des éléments, et / ou du cérium.

12. Procédé selon l'une quelconque des revendications 9 à 11, au cours duquel sont introduits, en tant que matériau de base, des fluoroaluminates de potassium ayant la formule brute K₁₋₃AlF₄₋₆ ou des fluorostannates de potassium et / ou de césium ayant les formules brutes KSnF₃ et CsSnF₃.

13. Utilisation d'un fondant selon l'une quelconque des revendications 1 à 5 pour la fabrication d'échangeurs de chaleur sur la base d'aluminium ou d'alliages d'aluminium pour la construction automobile.
